# EUROPÄISCHE PATENTSCHRIFT

(11) **EP 3 748 310 B1**
(45) Veröffentlichungstag und Bekanntmachung des Hinweises auf die Patenterteilung: **21.06.2023**
(21) Anmeldenummer: 20177040.1
(22) Anmeldetag: 28.05.2020
(51) Int. Cl.: G01F 1/66, G01F 1/667

(54) **ULTRASCHALLDURCHFLUSSMESSGERÄT**
ULTRASOUND FLOW MEASURING DEVICE
DÉBITMÈTRE À ULTRASONS

(30) Priorität: 07.06.2019 DE 102019115590
(43) Veröffentlichungstag der Anmeldung: 09.12.2020
(73) Patentinhaber: Krohne AG, 4019 Basel (CH)
(72) Erfinder: van Klooster, Jeroen Martin, 4005 GN Tiel (NL); Huijzer, Arie, 3363 BS Sliedrecht (NL)
(74) Vertreter: Gesthuysen Patentanwälte

(56) Entgegenhaltungen:
- EP-A1- 0 715 155
- EP-A1- 3 404 372
- DE-A1-102011 079 250
- DE-A1-102012 013 916
- DE-A1-102013 105 407
- DE-U1- 29 803 912

## Beschreibung

Die Erfindung geht aus von einem Ultraschalldurchflussmessgerät mit wenigstens einem Messrohr, mit wenigstens einem ersten Ultraschallwandler und einem zweiten Ultraschallwandler, wobei der erste Ultraschallwandler als Ultraschallsender und/oder als Ultraschallempfänger ausgestaltet ist und wobei der zweite Ultraschallwandler als Ultraschallsender und/oder als Ultraschallempfänger ausgestaltet ist, wobei die Ultraschallwandler in Strömungsrichtung gesehen versetzt derart an dem Messrohr angeordnet sind, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens drei Reflexionen empfängt, wobei wenigstens drei Reflexionsflächen vorhanden sind und wobei der Verlauf des Ultraschallsignals zwischen den Ultraschallwandlern einen Signalpfad definiert.

Die Messung des Durchflusses eines durch ein Messrohr strömenden Mediums mit einem Ultraschalldurchflussmessgerät ist aus dem Stand der Technik bekannt. Ultraschalldurchflussmessgeräte weisen in der Regel ein Messrohr und wenigstens zwei als Ultraschallsender und/oder Ultraschallempfänger ausgestaltete Ultraschallwandler auf, die in Strömungsrichtung (axial bezogen auf die Messrohrachse) voneinander beabstandet an dem Messrohr angeordnet sind. Zur Messung des Durchflusses wird ein Ultraschallsignal entlang des Signalpfades zwischen den Ultraschallwandlern sowohl in Strömungsrichtung als auch entgegengesetzt zur Strömungsrichtung ausgesendet. Aufgrund des Mitführeffektes ergibt sich eine unterschiedliche Laufzeit von den Signalen, die sich entlang eines Signalpfades mit bzw. entgegen der Strömung bewegen. Aus dem Laufzeitunterschied wird die Strömungsgeschwindigkeit und unter Berücksichtigung des Messrohrquerschnittes der Volumendurchfluss bestimmt.

Bekannt sind ebenfalls Ultraschalldurchflussmessgeräte, wobei der Signalpfad zwischen den beiden Ultraschallwandlern durch eine oder mehrere Reflexionen an jeweils einer Reflexionsfläche verlängert ist.

Die Druckschrift DE 10 2013 105 922 A1 offenbart ein Ultraschalldurchflussmessgerät, wobei der Signalpfad zwischen den beiden Ultraschallwandlern derart ausgebildet ist, dass er in axialer Draufsicht auf den Messrohrquerschnitt einen geschlossenen Signalpfadverlauf bildet und wobei das Signal innerhalb des Messrohrs an zwei Stellen in eine nahezu gleiche Ebene zurückreflektiert wird. Im Sinne dieses Dokumentes ist die relevante Ebene definiert als parallele Ebene zur Messrohrachse, die durch einen Teilabschnitt des Signalpfades aufgespannt wird. Durch den geschlossenen Signalpfadverlauf in Kombination mit einer zweifachen Rückreflexion können auch rotierende Strömungen mit Verwirbelungen zuverlässig erfasst werden, wie sie beispielsweise im Anschluss an Störungen im Rohr, beispielsweise Rohrbiegungen, 90°-Krümmern usw. auftreten können.

Zudem ist aus der Druckschrift EP 0 639 776 A1 ein Ultraschalldurchflussmessgerät bekannt, wobei eine Mehrzahl von Ultraschallwandlerpaaren derart an dem Messrohr angeordnet sind, dass wenigstens zwei Ultraschallsignale in das Messrohr ausgesendet werden, wobei die durch den jeweiligen Verlauf der Ultraschallsignale gebildeten Signalpfade einen unterschiedlichen Grad an Empfindlichkeit in Bezug auf die Symmetrie des Strömungsprofils aufweisen und wobei mindestens eine Schallwelle das Messrohr in Uhrzeigerrichtung durchläuft und wobei mindestens eine Schallwelle das Messrohr entgegen dem Uhrzeigersinn durchläuft. Mit dieser Anordnung können beispielsweise auch Strömungsprofile, die Verwirbelungen aufweisen zuverlässig vermessen werden.

Grundsätzlich kann insofern bei Signalpfaden, die wenigstens eine Reflexion an einer Reflexionsfläche aufweisen (sogenannte Mehrpfadsysteme) eine Rotationsrichtung (entsprechend dem Uhrzeigersinn oder entgegen dem Uhrzeigersinn) definiert werden, mit der das Ultraschallsignal das Messrohr durchläuft.

Die Druckschriften EP 0 715 155 A1, DE 10 2013 105 407 A1, DE 298 03 912 U1, DE 10 2012 013 916 A1 und DE 10 2011 079 250 A1 offenbaren Ultraschalldurchflussmessgeräte, wobei der Signalpfad einen ersten Signalpfadabschnitt mit einer ersten Rotationsrichtung und einen zweiten Signalpfadabschnitt mit einer zweiten Rotationsrichtung aufweist, wobei die zweite Rotationsrichtung der ersten Rotationsrichtung entgegengesetzt ist.

Ausgehend von diesem Stand der Technik ist es Aufgabe der Erfindung, ein Ultraschalldurchflussmessgerät anzugeben, das besonders einfach ausgestaltet ist und das auch bei ungleichmäßigen Strömungen, die beispielsweise Verwirbelungen aufweisen, eine besonders hohe Messgenauigkeit aufweist.

Erfindungsgemäß wird diese Aufgabe durch ein Ultraschalldurchflussmessgerät gemäß Anspruch 1 gelöst, wobei der Signalpfad wenigstens einen ersten Signalpfadabschnitt und wenigstens einen zweiten Signalpfadabschnitt aufweist, wobei der erste Signalpfadabschnitt mehr als zwei Teilabschnitte aufweist, und wobei der erste Signalpfadabschnitt in axialer Draufsicht auf den Messrohrquerschnitt den Strömungsquerschnitt im Wesentlichen zirkulär durchläuft oder in axialer Draufsicht auf den Messrohrquerschnitt im Wesentlichen ein Vieleck ausbildet, wobei der zweite Signalpfadabschnitt mehr als zwei Teilabschnitte aufweist, und wobei der zweite Signalpfadabschnitt in axialer Draufsicht auf den Messrohrquerschnitt den Strömungsquerschnitt im Wesentlichen zirkulär durchläuft oder in axialer Draufsicht auf den Messrohrquerschnitt im Wesentlichen ein Vieleck ausbildet, wobei die Anzahl der Teilabschnitte des ersten Signalpfadabschnittes der Anzahl der Teilabschnitte des zweiten Signalpfadabschnittes entspricht und wobei der Signalverlauf im ersten Signalpfadabschnitt eine erste Rotationsrichtung aufweist und dass der Signalverlauf im zweiten Signalpfadabschnitt eine zweite Rotationsrichtung aufweist, wobei die zweite Rotationsrichtung der ersten Rotationsrichtung entgegengesetzt ist, wobei der erste Ultraschallwandler und der zweite Ultraschallwandler und die Reflexionsfläche zwischen dem ersten Signalpfadabschnitt und dem zweiten Signalpfadabschnitt in axialer Richtung des Messrohrs in axialer Draufsicht auf den Messrohrquerschnitt an derselben Stelle des Messrohrumfangs oder leicht versetzt angeordnet sind.

Insbesondere weist der erste Signalpfadabschnitt unmittelbar aufeinanderfolgende Teilabschnitte auf und der zweite Signalpfadabschnitt weist ebenfalls unmittelbar aufeinanderfolgende Teilabschnitte auf.

Erfindungsgemäß wurde erkannt, dass in Mehrpfadsystemen eine besonders hohe Messgenauigkeit dadurch erreicht werden kann, dass die Ultraschallwandler derart ausgerichtet sind, dass eine erste Abtastung des Strömungsprofils in einem ersten Signalpfadabschnitt in axialer Draufsicht auf den Messrohrquerschnitt betrachtet in einer Rotationsrichtung, beispielsweise im Uhrzeigersinn, erfolgt und dass in einem zweiten Signalpfadabschnitt die Abtastung der zu vermessenden Strömung in entgegengesetzter Rotationsrichtung, beispielsweise entgegen dem Uhrzeigersinn, erfolgt.

Erfindungsgemäß weisen dabei die beiden Signalpfadabschnitte die gleiche Anzahl an Teilabschnitten auf, sodass die Strömung zu gleichen Anteilen in der ersten Rotationsrichtung und auch in der entgegengesetzten Rotationsrichtung durchlaufen wird. Diese erfindungsgemäße Ausgestaltung weist den Vorteil auf, dass rotierende Anteile einer Strömung, insbesondere Verwirbelungen, die bei der Vermessung des strömenden Mediums mittels Ultraschallsignalen fiktive Geschwindigkeitskomponenten erzeugen, in unterschiedlichen Richtungen durchlaufen werden, wodurch diese störenden Komponenten effektiv herausgefiltert werden können.

Im Ergebnis weist das erfindungsgemäße Ultraschalldurchflussmessgerät damit eine besonders hohe Messgenauigkeit auch bei unregelmäßigen Strömungsprofilen, die insbesondere Verwirbelungen umfassen, auf.

Gemäß einer ersten Ausgestaltung weist das Messrohr eine Innenwand auf, wobei wenigstens eine Reflexionsfläche durch die Innenwand des Messrohrs ausgebildet ist. Vorzugsweise sind alle Reflexionsflächen innerhalb eines Signalpfadabschnittes, also mit Ausnahme der Reflexionsfläche, die zwischen dem ersten Signalpfadabschnitt und dem zweiten Signalpfadabschnitt angeordnet ist, durch die Innenwand des Messrohrs ausgebildet. Jede einzelne Reflexionsfläche kann beispielsweise durch die glatte Innenwand des Messrohrs ausgebildet sein oder durch eine Ausformung des Messrohrs, wobei die Reflexionsfläche entweder in das Messrohr hineinragt oder in Bezug auf die Innenwand rückversetzt angeordnet ist, gebildet werden.

Gemäß einer nächsten vorteilhaften Ausgestaltung ist wenigstens ein Reflektorelement vorhanden, wobei das wenigstens eine Reflektorelement vorzugsweise zwischen dem ersten Signalpfadabschnitt und dem zweiten Signalpfadabschnitt angeordnet ist. Besonders bevorzugt ist das Reflektorelement damit in Strömungsrichtung gesehen, insbesondere mittig, zwischen den beiden Ultraschallwandlern angeordnet. Erfindungsgemäß sind die beiden Ultraschallwandler und die durch das Reflektorelement ausgebildete Reflexionsfläche in axialer Richtung betrachtet an derselben Stelle des Messrohrumfangs angeordnet.

Das Vorhandensein eines Reflektorelementes mit einer Reflexionsfläche, insbesondere zwischen dem ersten Signalpfadabschnitt und dem zweiten Signalpfadabschnitt weist den Vorteil auf, dass die Reflexion des Ultraschallsignals von dem ersten Signalpfadabschnitt in den zweiten Signalpfadabschnitt im Hinblick auf die Reflexionsrichtung durch eine entsprechende Ausgestaltung und Anordnung der Reflexionsfläche besonders flexibel ausgestaltet sein kann.

Bei einer besonders bevorzugten Ausgestaltung sind die Reflexionsflächen innerhalb des ersten und des zweiten Signalpfadabschnittes jeweils durch die glatte Innenwand des Messrohrs ausgebildet und die Reflexionsfläche zwischen dem ersten und dem zweiten Signalpfadabschnitt ist durch ein Reflektorelement ausgebildet. Diese Ausgestaltung weist den Vorteil auf, dass sie besonders einfach ausgebildet ist, da mit Hilfe von nur einem Reflektorelement eine komplette Abtastung des Strömungsprofils in zwei Rotationsrichtungen erfolgt.

Gemäß einer nächsten Ausgestaltung ist das Reflektorelement bzw. die durch das Reflektorelement ausgebildete Reflexionsfläche in Bezug auf die Innenwand des Messrohrs rückversetzt angeordnet. Alternativ oder zusätzlich ragt wenigstens ein Reflektorelement bzw. die durch das Reflektorelement ausgebildete Reflexionsfläche in das Messrohr hinein. Alternativ oder zusätzlich ist ein Reflektorelement bzw. die durch das Reflektorelement ausgebildete Reflexionsfläche bündig mit der Innenwand des Messrohrs ausgebildet.

Insbesondere zur Vermessung der Randbereiche des strömenden Mediums ist es ebenfalls denkbar, dass wenigstens ein Ultraschallwandler oder beide Ultraschallwandler in Bezug auf die Innenwand des Messrohrs rückversetzt angeordnet ist. Alternativ kann auch wenigstens ein Ultraschallwandler oder beide Ultraschallwandler in das Messrohr hineinragen.

Durch die flexible Möglichkeit der Anordnung eines oder mehrerer Reflektorelemente und/oder der Ultraschallwandler ist es möglich, unterschiedliche Signalpfadgeometrien zu realisieren.

Gemäß einer nächsten bevorzugten Ausgestaltung ist die Reflexionsfläche zwischen dem ersten Signalpfadabschnitt und dem zweiten Signalpfadabschnitt derart ausgestaltet und angeordnet, dass die Reflexion eine Richtungsumkehr in Bezug auf die Rotation des Signalverlaufs bewirkt. Besonders bevorzugt wird die Richtungsumkehr dadurch bewirkt, dass das Ultraschallsignal im Wesentlichen in die Ebene des einfallenden Ultraschallsignals zurückreflektiert wird.

Gemäß einer weiteren vorteilhaften Ausgestaltung weist der erste Signalpfadabschnitt mehr als zwei Teilabschnitte auf, wobei der erste Signalpfadabschnitt in axialer Draufsicht auf den Messrohrquerschnitt den Strömungsquerschnitt im Wesentlichen zirkulär durchläuft und der zweite Signalpfadabschnitt weist mehr als zwei Teilabschnitte auf, wobei der zweite Signalpfadabschnitt in axialer Draufsicht auf den Messrohrquerschnitt den Strömungsquerschnitt im Wesentlichen zirkulär durchläuft.

Wenn es heißt, dass der erste Signalpfadabschnitt bzw. der zweite Signalpfadabschnitt den Strömungsquerschnitt im Wesentlichen zirkulär durchläuft, so ist damit gemeint, dass der erste bzw. der zweite Signalpfadabschnitt in axialer Draufsicht jeweils im Wesentlichen die Form eines Vielecks aufweist.

Dabei ist gemäß einer Ausgestaltung das Vieleck geschlossen. Erfindungsgemäß sind der erste Ultraschallwandler und der zweite Ultraschallwandler und die Reflexionsfläche zwischen dem ersten Signalpfadabschnitt und dem zweiten Signalpfadabschnitt in axialer Richtung des Messrohrs in axialer Draufsicht auf den Messrohrquerschnitt an derselben Stelle des Messrohrumfangs angeordnet.

Gemäß einer weiteren erfindungsgemäßen Ausgestaltung sind der erste Ultraschallwandler und der zweite Ultraschallwandler und die Reflexionsfläche zwischen dem ersten Signalpfadabschnitt und dem zweiten Signalpfadabschnitt in axialer Richtung des Messrohrs im Hinblick auf den Messrohrumfang leicht versetzt angeordnet.

Gemäß einer Ausgestaltung ist der Signalpfad in axialer Draufsicht auf den Messrohrquerschnitt betrachtet als geschlossener Pfad ausgebildet. Gemäß dieser Ausgestaltung sind die Ultraschallwandler in axialer Richtung des Messrohrs an derselben Stelle des Messrohrumfangs angeordnet.

Diese Ausgestaltung weist den Vorteil auf, dass der Strömungsquerschnitt insgesamt im Wesentlichen zirkulär erfasst wird, was ebenfalls die Messgenauigkeit erhöht.

Gemäß einer weiteren vorteilhaften Ausgestaltung bildet jeder Signalpfadabschnitt in axialer Draufsicht einen geschlossenen Pfad aus.

Besonders bevorzugt sind der Signalverlauf des ersten Signalpfadabschnittes und der Signalverlauf des zweiten Signalpfadabschnittes in axialer Draufsicht im Wesentlichen deckungsgleich ausgebildet. Gemäß dieser Ausgestaltung gibt es einander entsprechende Teilabschnitte, die in derselben Ebene parallel zur Messrohrachse liegen und die im ersten Signalpfadabschnitt in einer ersten Rotationsrichtung durchlaufen werden und die im zweiten Signalpfadabschnitt in einer entgegengesetzten Rotationsrichtung durchlaufen werden.

Gemäß einer nächsten Ausgestaltung weisen der erste Signalabschnitt und der zweite Signalabschnitt jeweils mehr als zwei Teilabschnitte auf, wobei der Signalpfad und/oder jeder Signalpfadabschnitt in axialer Draufsicht auf den Messrohrquerschnitt im Wesentlichen ein Vieleck, insbesondere ein Dreieck oder ein Viereck oder ein Fünfeck bildet.

Im Einzelnen gibt es nun eine Vielzahl von Möglichkeiten, das erfindungsgemäße Ultraschalldurchflussmessgerät auszugestalten und weiterzubilden. Dazu wird verwiesen sowohl auf die dem unabhängigen Patentanspruch nachgeordneten Patentansprüche als auch auf die nachfolgende Beschreibung von bevorzugten Ausführungsbeispielen in Verbindung mit der Zeichnung. In der Zeichnung zeigen
- Fig. 1: ein erstes Ausführungsbeispiel eines erfindungsgemäßen Ultraschalldurchflussmessgerätes,
- Fig. 2: das erste Ausführungsbeispiel des erfindungsgemäßen Ultraschalldurchflussmessgerätes in einer weiteren Ansicht,
- Fig. 3: das erste Ausführungsbeispiel eines erfindungsgemäßen Ultraschalldurchflussmessgerätes in axialer Draufsicht auf den Messrohrquerschnitt,
- Fig. 4a bis den 4d: unterschiedliche Geometrien des Signalpfadverlaufes zwischen den Ultraschallwandlern in axialer Draufsicht und
- Fig. 5: ein weiteres Ausführungsbeispiel eines erfindungsgemäßen Ultraschalldurchflussmessgerätes in Teilansicht.

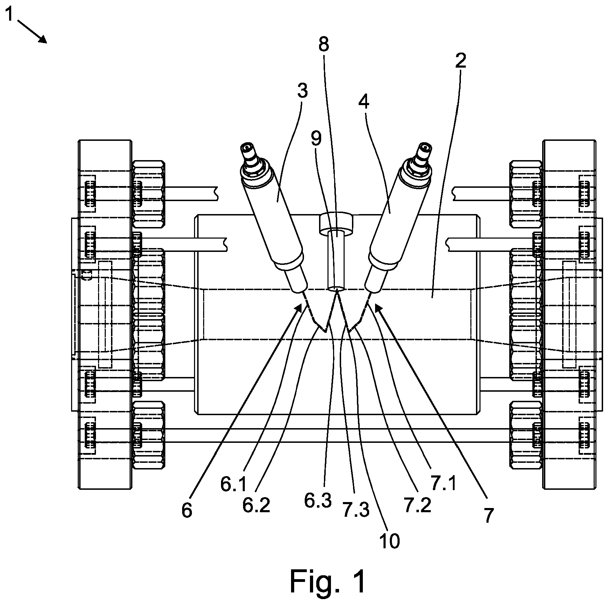

In Fig. 1 ist dargestellt ein Ausführungsbeispiel eines Ultraschalldurchflussmessgerätes 1 mit einem Messrohr 2 und mit einem ersten Ultraschallwandler 3, der je nach Betriebsmodus als Ultraschallsender oder als Ultraschallempfänger ausgestaltet ist und mit einem zweiten Ultraschallwandler 4, der ebenfalls je nach Betriebsmodus entweder als Ultraschallsender oder als Ultraschallempfänger ausgestaltet ist. Die Ultraschallwandler 3 und 4 sind in Strömungsrichtung gesehen versetzt derart an dem Messrohr angeordnet, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal empfängt. Der Verlauf des Ultraschallsignals zwischen den Ultraschallwandlern 3, 4 definiert einen Signalpfad 5.

Der zwischen den Ultraschallwandlern 3 und 4 ausgebildete Signalpfad 5 weist einen ersten Signalpfadabschnitt 6 und einen zweiten Signalabschnitt 7 auf, wobei der erste Signalpfadabschnitt 6 drei Teilabschnitte 6.1, 6.2, 6.3 aufweist und wobei der zweite Signalpfadabschnitt 7 ebenfalls drei Teilabschnitte 7.1, 7.2 und 7.3 aufweist. Dabei liegen die Teilabschnitte 6.1 und 7.3, sowie die Teilabschnitte 6.2 und 7.2 sowie die Teilabschnitte 6.3 und 7.1 jeweils in derselben Ebene parallel zur Messrohrachse. Zwischen dem ersten Signalpfadabschnitt 6 und dem zweiten Signalpfadabschnitt 7 ist ein Reflektorelement 8 mit einer Reflexionsfläche 9 angeordnet. Jeder Signalpfadabschnitt 6, 7 weist zwei weitere Reflexionen auf, wobei die jeweiligen Reflexionsflächen 10 durch die glatte Innenwand 11 des Messrohrs 2 ausgebildet sind.

Durch den Verlauf des Signalpfades 5 wird das durch das Messrohr strömende Medium im Betrieb je nach Strömungsrichtung zunächst entgegen dem Uhrzeigersinn und danach im Uhrzeigersinn abgetastet oder umgekehrt.

Damit weist das dargestellte Ultraschalldurchflussmessgerät den Vorteil auf, dass es zum einen besonders einfach ausgestaltet ist und zum anderen auch bei Strömungen, die Verwirbelungen aufweisen, eine besonders hohe Messgenauigkeit gewährleistet.

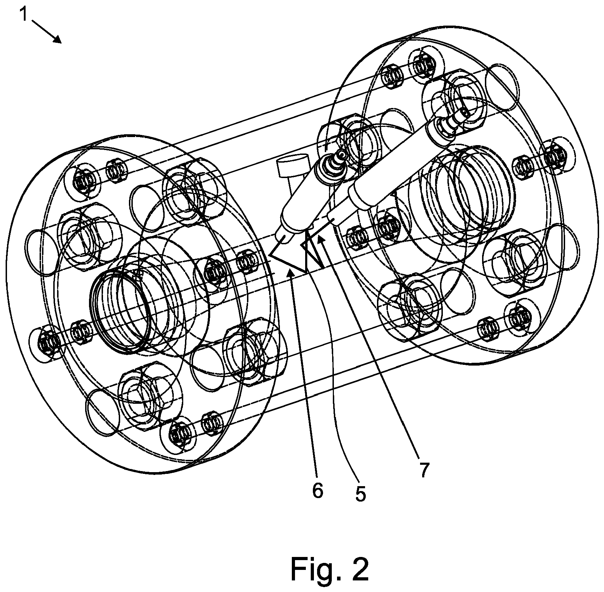

Fig. 2 zeigt das gleiche Ausführungsbeispiel des Ultraschalldurchflussmessgerätes 1 in anderer Ansicht. Dargestellt ist, dass der Signalpfad 5 insgesamt, aber auch jeder Signalpfadabschnitt 6 und 7 einen geschlossenen Pfad ausbilden, wobei in axialer Richtung betrachtet sowohl die Ultraschallwandler 3 und 4 als auch die Reflexionsfläche 9 an derselben Stelle des Messrohrumfangs angeordnet sind. In dem dargestellten Ausführungsbeispiel ist jeder Signalpfadabschnitt 6 und 7 in axialer Draufsicht in Form eines Dreiecks ausgebildet, wobei der erste Signalpfadabschnitt 6 in axialer Draufsicht des Messrohr entgegen dem Uhrzeigersinn durchläuft und wobei der zweite Signalspfadabschnitt 7 das Messrohr im Uhrzeigersinn durchläuft, sodass eventuell vorhandene Verwirbelungen im Strömungsprofil besonders einfach dadurch herausgefiltert werden, dass das Ultraschallsignal die Verwirbelung in derselben Ebene sowohl im Uhrzeigersinn als auch entgegen dem Uhrzeigersinn durchläuft.

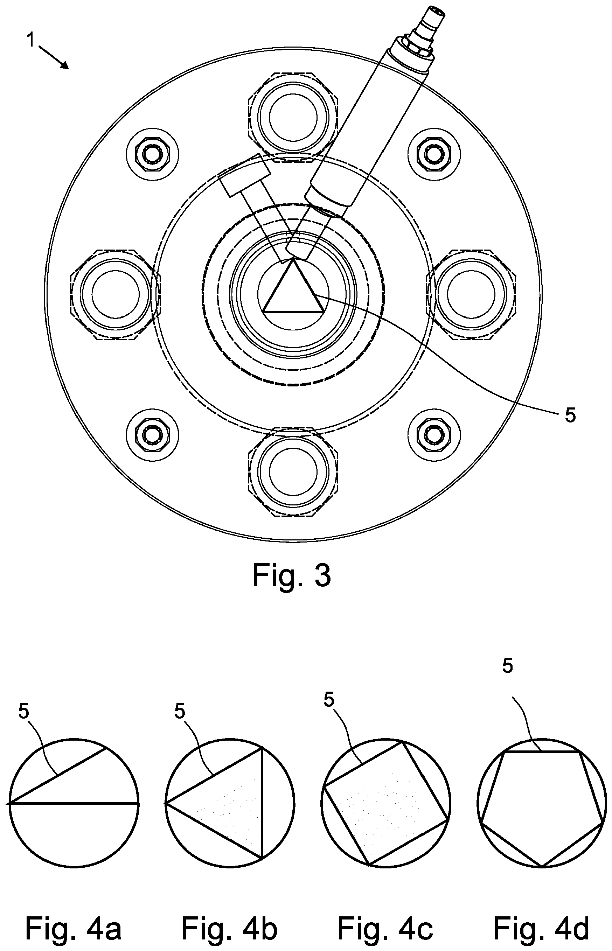

Fig. 3 zeigt die axiale Draufsicht auf den Messrohrquerschnitt des ersten Ausführungsbeispiels des Ultraschalldurchflussmessgerätes 1. Die Darstellung zeigt, dass in dieser Ansicht der Signalpfad 5 bzw. die Signalpfadabschnitte 6 und 7 die Form eines Dreiecks aufweisen.

In den Fig. 4a bis 4d sind alternative Signalpfadverläufe des Signalpfads 5 schematisch in axialer Draufsicht dargestellt. Im einfachsten Fall, in einer nicht erfindungsgemäßen Ausführungsform, umfasst jeder Signalpfadabschnitt 6, 7 lediglich eine Reflexion beispielsweise gegen die Innenwand des Messrohrs 2, wobei der Signalpfad 5 zusätzlich eine Reflexion zwischen dem ersten Signalpfadabschnitt 6 und dem zweiten Signalpfadabschnitt 7 umfasst, die die Rotationsrichtung des Signalpfades 5 bzw. des im Betrieb ausgesendeten Ultraschallsignals umkehrt. Diese besonders einfache nicht erfindungsgemäße Ausgestaltung ist in Fig. 4a dargestellt.

Zudem kann der Signalpfad 5 in axialer Draufsicht ebenfalls die Form eines Dreieckes (Fig. 4b) oder eine quadratische Form (4c), wodurch weiter außen liegende Bereiche des Strömungsprofils erfasst werden können oder auch die Form eines Fünfecks (Fig. 4d) aufweisen, wodurch auch der Randbereich des Strömungsprofils erfasst werden kann.

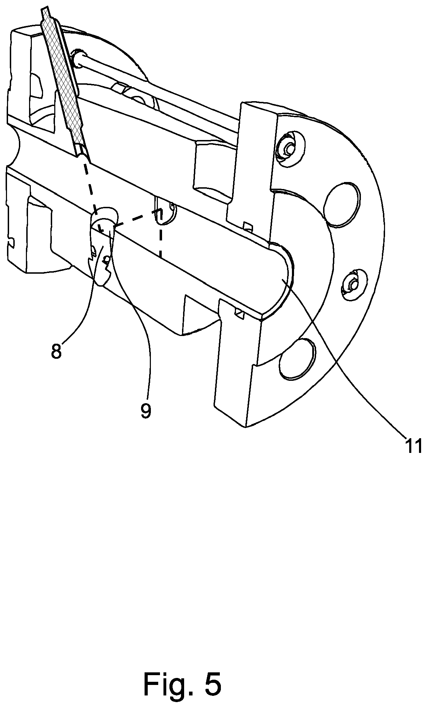

Zur flexiblen Ausgestaltung des Signalverlaufes können ein oder mehrere Reflektorelemente 8 vorhanden sein, wobei das Reflektorelement 8 bzw. die Reflexionsfläche 9 in Bezug auf die Innenwand 11 des Messrohrs 2 entweder rückversetzt angeordnet sein können oder auch in das Messrohr 2 hineinragen. Dies ist in Fig. 5 dargestellt. Je nach Anordnung der Reflexionsflächen 9 ist es dadurch möglich, Bereiche des Strömungsprofils die eher im Randbereich liegen, zu vermessen oder auch Bereiche, die nahe der Messrohrachse liegen. Darüber hinaus können auch die Ultraschallwandler 3, 4 rückversetzt angeordnet sein oder in das Messrohr 2 hineinragen, um unterschiedlich Geometrien des Signalverlaufs zu realisieren.

Im Ergebnis zeigen sämtliche Ausführungsbeispiele ein Ultraschalldurchflussmessgerät oder auch Teile von diesem, wobei aufgrund der vorteilhaften Signalführung eine besonders hohe Messgenauigkeit gewährleistet werden kann.

### Bezugszeichen

- 1: Ultraschalldurchflussmessgerät
- 2: Messrohr
- 3: Ultraschallwandler
- 4: Ultraschallwandler
- 5: Signalpfad
- 6: erster Signalpfadabschnitt
- 6.1, 6.2, 6.3: Teilabschnitte
- 7: zweiter Signalpfadabschnitt
- 7.1, 7.2, 7.3: Teilabschnitt
- 8: Reflektor
- 9: Reflexionsfläche
- 10: Reflexionsfläche
- 11: Innenwand des Messrohrs

## Patentansprüche

1. Ultraschalldurchflussmessgerät (1) mit wenigstens einem Messrohr (2), mit wenigstens einem ersten Ultraschallwandler (3) und einem zweiten Ultraschallwandler (4), wobei der erste Ultraschallwandler (3) als Ultraschallsender und/oder als Ultraschallempfänger ausgestaltet ist und wobei der zweite Ultraschallwandler (4) als Ultraschallsender und/oder als Ultraschallempfänger ausgestaltet ist, wobei die Ultraschallwandler (3,4) in Strömungsrichtung gesehen versetzt derart an dem Messrohr (2) angeordnet sind, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens drei Reflexionen empfängt, wobei wenigstens drei Reflexionsflächen (9, 10) vorhanden sind und wobei der Verlauf des Ultraschallsignals zwischen den Ultraschallwandlern (3,4) einen Signalpfad (5) definiert,
wobei der Signalpfad (5) wenigstens einen ersten Signalpfadabschnitt (6) und wenigstens einen zweiten Signalpfadabschnitt (7) aufweist, wobei der erste Signalpfadabschnitt (6) mehr als zwei Teilabschnitte (6.1, 6.2, 6.3) aufweist, und wobei der erste Signalpfadabschnitt (6) in axialer Draufsicht auf den Messrohrquerschnitt den Strömungsquerschnitt im Wesentlichen zirkulär durchläuft oder in axialer Draufsicht auf den Messrohrquerschnitt im Wesentlichen ein Vieleck ausbildet, wobei der zweite Signalpfadabschnitt (7) mehr als zwei Teilabschnitte (7.1, 7.2, 7.3) aufweist, und wobei der zweite Signalpfadabschnitt (7) in axialer Draufsicht auf den Messrohrquerschnitt den Strömungsquerschnitt im Wesentlichen zirkulär durchläuft oder in axialer Draufsicht auf den Messrohrquerschnitt im Wesentlichen ein Vieleck ausbildet, wobei die Anzahl der Teilabschnitte (6.1, 6.2, 6.3) des ersten Signalpfadabschnittes (6) der Anzahl der Teilabschnitte (7.1, 7.2, 7.3) des zweiten Signalpfadabschnittes (7) entspricht und
wobei der Signalverlauf im ersten Signalpfadabschnitt (6) in axialer Draufsicht auf den Messrohrquerschnitt eine erste Rotationsrichtung aufweist und der Signalverlauf im zweiten Signalpfadabschnitt (7) in axialer Draufsicht auf den Messrohrquerschnitt eine zweite Rotationsrichtung aufweist, wobei die zweite Rotationsrichtung der ersten Rotationsrichtung entgegengesetzt ist,
**dadurch gekennzeichnet,**
**dass** der erste Ultraschallwandler und der zweite Ultraschallwandler und die Reflexionsfläche zwischen dem ersten Signalpfadabschnitt und dem zweiten Signalpfadabschnitt in axialer Richtung des Messrohrs in axialer Draufsicht auf den Messrohrquerschnitt an derselben Stelle des Messrohrumfangs oder leicht versetzt angeordnet sind.

2. Ultraschalldurchflussmessgerät (1) nach Anspruch 1, **dadurch gekennzeichnet, dass** das Messrohr (2) eine Innenwand (11) aufweist und dass wenigstens eine Reflexionsfläche (10) durch die Innenwand (11) des Messrohrs (2) gebildet ist.

3. Ultraschalldurchflussmessgerät (1) nach Anspruch 1 oder 2, **dadurch gekennzeichnet, dass** wenigstens ein Reflektorelement (8) vorhanden ist, wobei das wenigstens eine Reflektorelement (8) vorzugsweise zwischen dem ersten Signalpfadabschnitt (6) und dem zweiten Signalpfadabschnitt (7) angeordnet ist.

4. Ultraschalldurchflussmessgerät (1) nach Anspruch 3, **dadurch gekennzeichnet, dass** das wenigstens eine Reflektorelement (8) bzw. die durch das wenigstens eine Reflektorelement (8) ausgebildete Reflexionsfläche (9) in Bezug auf die Innenwand (11) des Messrohrs (2) rückversetzt angeordnet ist.

5. Ultraschalldurchflussmessgerät (1) nach einem der Ansprüche 1 bis 4, **dadurch gekennzeichnet, dass** die Reflexionsfläche (9, 10) zwischen dem ersten Signalpfadabschnitt (6) und dem zweiten Signalpfadabschnitt (7) derart ausgebildet ist, dass die Reflexion eine Richtungsumkehr in Bezug auf die Rotation des Signalverlaufs bewirkt.

6. Ultraschalldurchflussmessgerät (1) nach einem der Ansprüche 1 bis 5, **dadurch gekennzeichnet, dass** der Signalpfad (5) in axialer Draufsicht auf den Messrohrquerschnitt als geschlossener Pfad ausgebildet ist.

7. Ultraschalldurchflussmessgerät (1) nach einem der Ansprüche 1 bis 6, **dadurch gekennzeichnet, dass** jeder Signalpfadabschnitt (6,7) in axialer Draufsicht auf den Messrohrquerschnitt einen geschlossenen Pfad ausbildet.

8. Ultraschalldurchflussmessgerät (1) nach Anspruch 7, **dadurch gekennzeichnet, dass** der Signalverlauf des ersten Signalpfadabschnittes (6) und der Signalverlauf des zweiten Signalpfadabschnittes (7) in axialer Draufsicht im Wesentlichen deckungsgleich ausgebildet ist.

9. Ultraschalldurchflussmessgerät (1) nach einem der Ansprüche 1 bis 8, **dadurch gekennzeichnet, dass** der Signalpfad (5) und/oder jeder Signalpfadabschnitt (6,7) in axialer Draufsicht auf den Messrohrquerschnitt ein Dreieck oder ein Viereck oder ein Fünfeck ausbildet.

## Claims

1. Ultrasonic flowmeter (1) with at least one measuring tube (2), with at least one first ultrasonic transducer (3) and one second ultrasonic transducer (4), wherein the first ultrasonic transducer (3) is designed as an ultrasonic transmitter and/or as an ultrasonic receiver and wherein the second ultrasonic transducer (4) is designed as an ultrasonic transmitter and/or as an ultrasonic receiver, wherein the ultrasonic transducers (3, 4) are arranged offset on the measuring tube (2), viewed in the direction of flow, such that, during operation, the respective transmitter transmits an ultrasonic signal in the direction of flow or against the direction of flow, and that the receiver receives the ultrasonic signal transmitted by the transmitter after at least three reflections, wherein at least three reflecting surfaces (9, 10) are provided, and wherein the course of the ultrasonic signal between the ultrasonic transducers (3, 4) defines a signal path (5),
wherein the signal path (5) has at least one first signal path section (6) and at least one second signal path section (7), wherein the first signal path section (6) has more than two sub-sections (6.1, 6.2, 6.3), and wherein the first signal path section (6), in axial plan view of the measuring tube cross-section, traverses the flow cross-section substantially circularly or, in axial plan view of the measuring tube cross-section, substantially forms a polygon, wherein the second signal path section (7) comprises more than two partial sections (7. 1, 7.2, 7.3) and wherein the second signal path section (7), in axial plan view of the measuring tube cross-section, passes through the flow cross-section in a substantially circular manner or, in axial plan view of the measuring tube cross-section, substantially forms a polygon, wherein the number of sub-sections (6.1, 6.2, 6.3) of the first signal path section (6) corresponds to the number of sub-sections (7.1, 7.2, 7.3) of the second signal path section (7) and
wherein the signal path in the first signal path section (6) has a first direction of rotation in axial plan view and that the signal path in the second signal path section (7) has a second direction of rotation in axial plan view, wherein the second direction of rotation is opposite the first direction of rotation
**characterized in**
**that** the first ultrasonic transducer and the second ultrasonic transducer and the reflection surface between the first signal path section and the second signal path section are arranged in the axial direction of the measuring tube in axial plan view of the measuring tube cross section at the same point of the measuring tube circumference or slightly offset.

2. Ultrasonic flowmeter (1) according to claim 1, **characterized in that** the measuring tube (2) has an inner wall (11) and that at least one reflecting surface (10) is formed by the inner wall (11) of the measuring tube (2).

3. Ultrasonic flowmeter (1) according to claim 1 or 2, **characterized in that** at least one reflector element (8) is provided, wherein the at least one reflector element (8) is preferably arranged between the first signal path section (6) and the second signal path section (7).

4. Ultrasonic flowmeter (1) according to claim 3, **characterized in that** the at least one reflector element (8) or the reflecting surface (9) formed by the at least one reflector element (8) is set back in relation to the inner wall (11) of the measuring tube (2).

5. Ultrasonic flowmeter (1) according to any one of claims 1 to 4, **characterized in that** the reflecting surface (9, 10) between the first signal path section (6) and the second signal path section (7) is formed such that the reflection causes a reversal of direction with respect to the rotation of the signal path.

6. Ultrasonic flowmeter (1) according to any one of claims 1 to 5, **characterized in that** the signal path (5) is designed as a closed path in axial plan view of the measuring tube cross-section.

7. Ultrasonic flowmeter (1) according to any one of claims 1 to 6, **characterized in that** each signal path section (6, 7) forms a closed path in axial plan view of the measuring tube cross-section.

8. Ultrasonic flow meter (1) according to claim 7, **characterized in that** the signal path of the first signal path section (6) and the signal path of the second signal path section (7) are essentially congruent in axial plan view.

9. Ultrasonic flowmeter (1) according to any one of claims 1 to 9, **characterized in that** the signal path (5) and/or each signal path section (6, 7) forms a triangle or a quadrilateral or a pentagon, in axial plan view of the measuring tube cross-section.

## Revendications

1. Débitmètre à ultrasons (1) comprenant au moins un tube de mesure (2), au moins un premier transducteur à ultrasons (3) et un deuxième transducteur à ultrasons (4), le premier transducteur à ultrasons (3) étant conçu comme un émetteur d'ultrasons et/ou comme un récepteur d'ultrasons et le deuxième transducteur à ultrasons (4) étant conçu comme un émetteur d'ultrasons et/ou comme un récepteur d'ultrasons, les transducteurs à ultrasons (3, 4) étant disposés sur le tube de mesure (2) en étant décalés dans le sens d'écoulement de manière à ce que l'émetteur respectif émette un signal ultrasonore dans le sens d'écoulement ou dans le sens opposé au sens d'écoulement pendant le fonctionnement et à ce que le récepteur reçoive le signal ultrasonore émis par l'émetteur après au moins trois réflexions, au moins trois surfaces de réflexion (9, 10) étant présentes et la courbe du signal ultrasonore entre les transducteurs à ultrasons (3, 4) définissant un chemin de signal (5),
le chemin de signal (5) comportant au moins une première portion de chemin de signal (6) et au moins une deuxième portion de chemin de signal (7), la première portion de chemin de signal (6) comportant plus de deux sous-portions (6.1, 6.2, 6.3), et la première portion de chemin de signal (6) s'étendant sensiblement de manière circulaire à travers la section transversale d'écoulement dans une vue de dessus axiale de la section transversale du tube de mesure ou formant sensiblement un polygone dans une vue de dessus axiale de la section transversale du tube de mesure, la deuxième portion de chemin de signal (7) comportant plus de deux sous-portions (7.1, 7.2, 7.3), et la deuxième portion de chemin de signal (7) s'étendant sensiblement de manière circulaire à travers la section transversale d'écoulement dans une vue de dessus axiale de la section transversale du tube de mesure ou formant sensiblement un polygone dans une vue de dessus axiale de la section transversale du tube de mesure, le nombre de sous-portions (6.1, 6.2, 6.3) de la première portion de chemin de signal (6) correspondant au nombre de sous-portions (7.1, 7.2, 7.3) de la deuxième portion de chemin de signal (7) et la courbe de signal dans la première portion de chemin de signal (6) présentant un premier sens de rotation dans une vue de dessus axiale de la section transversale du tube de mesure et la courbe de signal dans la deuxième portion de chemin de signal (7) présentant un deuxième sens de rotation dans une vue de dessus axiale de la section transversale du tube de mesure, le deuxième sens de rotation étant opposé au premier sens de rotation,
**caractérisé en ce que** le premier transducteur à ultrasons et le deuxième transducteur à ultrasons sont disposés dans la direction axiale du tube de mesure sur la circonférence du tube de mesure ou en étant légèrement décalés dans une vue de dessus axiale de la section transversale du tube de mesure au même emplacement.

2. Débitmètre à ultrasons (1) selon la revendication 1, **caractérisé en ce que** le tube de mesure (2) comporte une paroi intérieure (11) et **en ce qu'**au moins une surface de réflexion (10) est formée par la paroi intérieure (11) du tube de mesure (2).

3. Débitmètre à ultrasons (1) selon la revendication 1 ou 2, **caractérisé en ce qu'**au moins un élément réflecteur (8) est présent, l'au moins un élément réflecteur (8) étant de préférence disposé entre la première portion de chemin de signal (6) et la deuxième portion de chemin de signal (7).

4. Débitmètre à ultrasons (1) selon la revendication 3, **caractérisé en ce que** l'au moins un élément réflecteur (8) ou la surface de réflexion (9) formée par l'au moins un élément réflecteur (8) est en retrait par rapport à la paroi intérieure (11) du tube de mesure (2).

5. Débitmètre à ultrasons (1) selon l'une des revendications 1 à 4, **caractérisé en ce que** la surface de réflexion (9, 10) entre la première portion de chemin de signal (6) et la deuxième portion de chemin de signal (7) est conçue de manière à ce que la réflexion provoque une inversion de sens par rapport à la rotation de la courbe de signal.

6. Débitmètre à ultrasons (1) selon l'une des revendications 1 à 5, **caractérisé en ce que** le chemin de signal (5) est conçu sous la forme d'un chemin fermé dans une vue de dessus axiale de la section transversale du tube de mesure.

7. Débitmètre à ultrasons (1) selon l'une des revendications 1 à 6, **caractérisé en ce que** chaque portion de chemin de signal (6,7) forme un chemin fermé dans une vue de dessus axiale de la section transversale du tube de mesure.

8. Débitmètre à ultrasons (1) selon la revendication 7, **caractérisé en ce que** la courbe de signal de la première portion de chemin de signal (6) et la courbe de signal de la deuxième portion de chemin de signal (7) sont sensiblement congruentes dans une vue de dessus axiale.

9. Débitmètre à ultrasons (1) selon l'une des revendications 1 à 8, **caractérisé en ce que** le chemin de signal (5) et/ou chaque portion de chemin de signal (6, 7) forment un triangle ou un carré ou un pentagone dans une vue de dessus axiale de la section transversale du tube de mesure.
